# EUROPEAN PATENT APPLICATION

(11) **EP 1 947 597 A1**
(43) Date of publication of application: **23.07.2008**
(21) Application number: 07001272.9
(22) Date of filing: 22.01.2007
(51) Int. Cl.: G06Q 10/00

(54) **Personal air travel manager**

(71) Applicant: Infomovement Ltd., London EC2M 5QQ (GB)
(72) Inventor: Roberts, Alan, 9260 Gistrup (DK); Jensen, Jens E., 9000 Aalborg (DK)

(57) **Abstract**

The invention relates to a method and a system of information provision to one or more travellers in possession of transmission reception equipment such as mobile phones or personal computers. The system uses standard communication methods. The invention is a method and a system for distributing information to travellers and that allows each traveller to have a personalised information service delivering relevant information to the traveller in good time in the language of the traveller's choice. This means that the traveller relies less heavily on the current information distribution channels and therefore uses less valuable time on finding out information.

## Description

### Field of the invention

The invention relates to a method and a system of information provision to one or more travellers in possession of transmission reception equipment such as mobile phones or personal computers. The system uses standard communication methods, such as Short Message Services (SMS or `TEXTS'), Multimedia Message Services (MMS) and Electronic Mail (EMAIL), to communicate information to specific travellers.

GB 2 357 393 discloses an information transmission system, particularly suitable for providing flight departure information to airport passengers via SMS messages transmitted to mobile phone receivers owned by or loaned to passengers. The system comprises a system base station including; a transmitter arranged for communication with a plurality of mobile receiver units via a mobile radio system; a CPU in which data is registered relating to a plurality of different subjects, (e.g. passenger check-in data, flight data, passenger phone numbers); an alert signal generator; and a short message service (SMS) message generator, the alert signal generator being responsive to data stored in the CPU for initiating the generation of an appropriate SMS message to one or more mobile receiver units, consequent upon registration in the CPU of data relating to a predetermined subject, e.g. "ready to board" event. System also has application to appointments which may be subject to delay or to customer services, for which a customer must queue, alerting the user to the delay or to the availability of the service, e.g. parent teacher meeting, supermarket delicatessen, car, tyre or MOT service centres. However, the system has no means for combining information from travel providers with information from traveller communications data, thus the information is one-to-one or the information is overall.

US 2002/0082848 disclose a system and method for providing flight information data to an airport. A flight information provider collects airline-specific flight information data from several airlines. The airline-specific flight information is then processed by the flight information provider to generate airport-specific flight information containing flight information for flights arriving at and departing from each airport. Web pages are then generated for each airport containing the airport-specific flight information for that airport. The web pages are then transmitted to the airports for display on monitors in the airports. However, the system has no means for storing data relating to the traveller, thus the information is overall to many travellers or to all travellers at an airport having data receiving devices.

### The problem

Travellers using services or processes have to use unnecessarily effort to govern their travel schedule and retrieve information regarding processes or occurrences of the travel schedule. Often, gathering data from more than one source and then assimilating it.

### The invention

The invention concerns the gathering and processing of data from different data sources with the purpose of communication of time-critical personal and general information distribution to travellers regarding processes and occurrences that the travellers are participating in or that the travellers expect to participate in within a specific time frame, and preferably given in the travellers own language.

The invention is a method and a system of gathering and transmitting information to travellers who require information and updates relating to procedures and occurrences that are of interest to the traveller. The information is transmitted in the language requested by the traveller who requests the information to be sent. The primary focus of the system is to capture travel itineraries requested by travellers and keep them informed of relevant information from before a journey starts until after it ends. The capture/inform method can be applied to any situation where a traveller instigates a process or procedure that can be monitored from start to end so the system will be used for other purposes than just travel.

Information Movement programs use information obtained from a single source or multiple sources combined with logical and chronological criteria to create an 'Event'. The 'Event' triggers the creation of Information Messages that are delivered by electronic transmission to the travellers who require the information.

The system delivers time-critical Information Messages that guide receivers though events or series of events that follow a time line, Alert Information Messages to inform receivers of up-coming or completed events, General Information Messages or Advertising Messages. The same Information Message may be sent to any number of receivers depending on any combination of the subject of the information (content), the immediacy of the information and the requirements of the travellers. The system is very suitable for guiding travellers who use one or more methods of transport through their journeys, for informing travellers on the status of processes that they must track, e.g. having their car maintained at a workshop, for bulk messaging to groups of receivers.

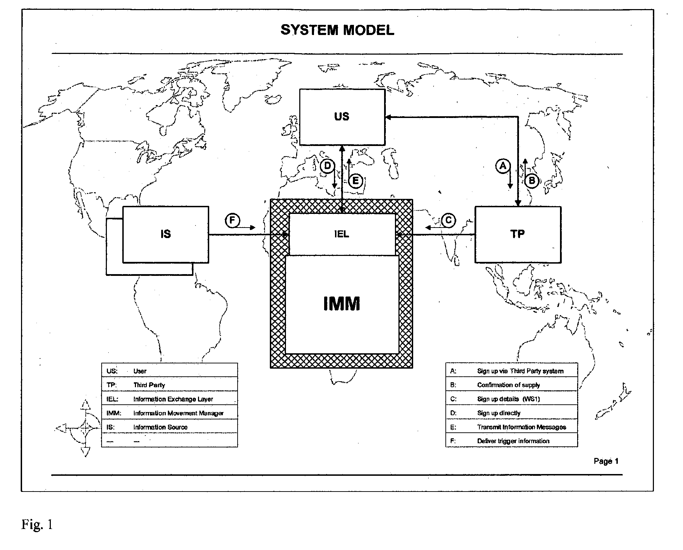

Figure 1 shows a system model according to the invention. The key to the system model is:

| | |
|---|---|
| US | User |
| TP | Third Party |
| IEL | Information Exchange Layer |
| IMM | Information Movement Manager |
| IS | Information Source |

The flow of information is in the direction of the arrows connected the letters mentioned in this table:

| | |
|---|---|
| A | Sign Up via Third Party |
| B | Confirmation of Sign Up |
| C | Sign Up details |
| D | Sign Up directly |
| E | Information Messages |
| F | Message Trigger information |

### The airport example

Currently an airport distributes information to travellers using visual means, such as television or computer screens, or by aural means using voice over a public address system. These methods of providing information are time consuming and therefore inconvenient for travellers.

Using information distribution by screen requires that there must be ample time and opportunity for a traveller to be within reading range of a screen. The Traveller must then pick out the information that is relevant to him quickly since not all the information shown on a screen is specific to him as a traveller.

The traveller generally has to look and read twice or more, first to find the information, and then second to verify that the Traveller read it correctly. The traveller then has to remember the information for action later as most screen information is displayed well in advance of it's time of application. In general, a traveller will not only consult the screens once but will have to do it on numerous occasions in various parts of an airport.

Similarly, when a voice announcement is given by the airport, the traveller has to first hear the message, understand the language it is given in, register that the announcement being given is of interest or could be of use to the traveller, listen to the information that is being given and work out if it had any consequence for the traveller. If the message did have a consequence for the traveller, the traveller must either act on it immediately or remember the action that the traveller must take so that the traveller acts on it later.

In both of these methods of information distribution there are inherent problems at each step in the information acquisition process by the traveller.

### With regard to the screen method:

The traveller has to be reminded/remind himself within good time to check screens for updated or 'forgotten' information. When the Traveller does think about it or needs information quickly there may not be a screen close by. The traveller may well be hindered by having to care for the Traveller's luggage and/or family when seeking a screen. There may be obstructions in front of the screen(s) which slow down how quickly the Traveller gets the Traveller's information - generally this hindrance is other travellers who stand in front of the screens because they too want information. The screen(s) may not be showing the information that the Traveller wants to have; frequently the screen(s) scroll information because they are not big enough to show everything at the same time or maybe the information is just not being displayed any more. Once the information that is required is obtained it has to be remembered.

### With regard to the voice method:

The message may not be heard if the traveller is out of audio range. The message may not be heard if there is surrounding noise interference, for example travellers in a bar/café talking or family children playing or being unhappy. The message could be in a language that the traveller does not understand either very well or at all. The message may also be misunderstood if just a word or two were not heard. The message may be one in a series of messages that are being broadcast so the attention of the traveller to each one diminishes. The traveller may not realise that the message relates to him if the Traveller is not sure of, say the Traveller's flight number or the Traveller's precise departure time. Once the information from the message has been registered it must be remembered.

### The Invention

The invention is a method and a system for distributing information to travellers, and that allows each traveller to have a personalised information service delivering relevant information to the traveller in good time in the language of the traveller's choice. This means that the traveller relies less heavily on current information distribution channels and therefore uses less valuable time on finding out information.

The invention requires that the traveller has access to a device that receives information sent from the system. Typically the device is a mobile telephone or personal computer although the technology of the invention is able to handle all methods of electronic communication.

Information Messages are sent using contemporary wireless or land-based technology using contemporary information formats which include Short Message Services (SMS or 'TEXTS'), Multimedia Message Services (MMS) and Electronic Mail (EMAIL) - these forms of transmission are widely used throughout the world by the vast majority of phone and computer users so do not have to be described in detail here.

The invention combines information to create a number of processes or occurrences that then make it possible to create a plan for distributing timely information about a process or an occurrence in the travel schedule, that is taking place or is going to take place. The invention can be applied to any situation where a traveller wants to be either guided by messages or be informed of occurrences during a process.

### Example Application

For the sake of this description the airline travel information distribution task is completed with use of the new system.

The System Model Diagram can have its generic Entity Names replaced with the entity names that suit the airline travel example. By doing so the diagram becomes this:

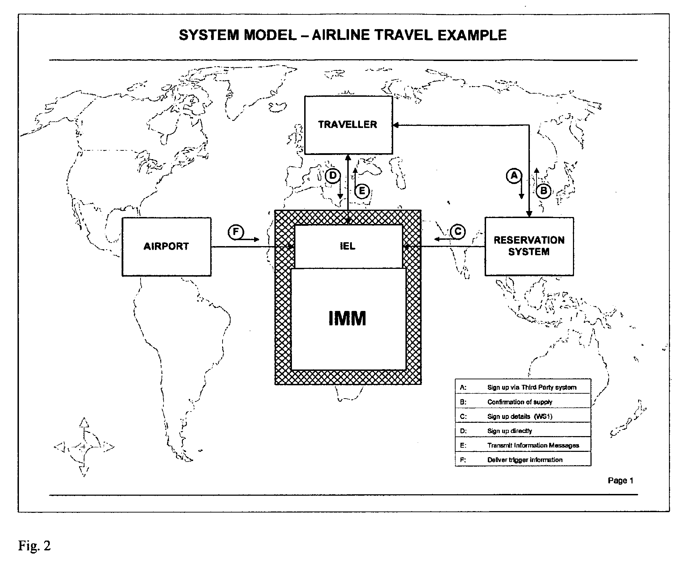

Figure 2 shows a system model according to an airline example of the invention. The invention requires information input from either one or a number of information suppliers.

In the case of the airline travel information distribution example the User is a Traveller, the Third Party can be an Airline Reservation System and the Information Suppliers are The Departure and Arrival Airports. These entities provide, for example, flight numbers, flight dates and telephone numbers of passengers as well as information regarding flights and aeroplane conditions. Combining the information allows the invention to guide and inform the Traveller at a personal level regarding the Traveller's travel in the Traveller's language of choice.

The general process is as follows:

Via a Third Party, or directly to the IMM, the Traveller Signs Up by agreeing that the Traveller is willing to receive personal Information Messages and by providing details such as the Traveller's telephone or email address to enable the delivery of Information Messages from the IMM to the Traveller.

At the same time other pertinent information such as flight numbers, dates of travel and departure and arrival airports are supplied by the Traveller. Flows A and D in the diagram handle these Sign Up cases.

If the Sign Up is made via a Third Party then the Sign Up details of the Traveller along with the other pertinent details already mentioned by example are passed to the IMM by the Third Party. Flow C in the diagram handles this case. The IMM stores the Traveller's information.

On the flight day external or internal occurrences cause the IMM to trigger messages to the Traveller, for example:
Whenever the check-in desk to use for the flight becomes known a message is sent to the Traveller.
Whenever the gate the aeroplane will leave from becomes known a message is sent to the Traveller.
Whenever the opening time of the gate for the flight becomes known a message is sent to the Traveller
Whenever a gate number is changed a message is sent to the Traveller
Whenever an aeroplane is delayed a message is sent to the Traveller

Flow F, the IMM by using logic and the integral IEL, and Flow E handle these cases

In fact, all relevant information regarding the whole process of taking the flight is sent to the Traveller as Information Messages so the Traveller no longer has to rely entirely on consulting TV screens or listening to voice announcements at the Airport.

Either during Sign Up directly with the IMM or after Signing Up via a Third Party the invention allows the Traveller to configure the Information Message service to suit the Traveller's requirements. For example; if the flight is in the early morning the Traveller may request a wake up call. The IMM will request the wake up call and send an Information Message to the Traveller at that time reminding him of the departure airport, flight number and time. This type of Information Message, as with the flight day event messages described above, is a 'Triggered Message' as it is triggered by an occurrence external to the IMM.

The invention also generates 'Logical events' to create 'Logical Messages'. A 'Logical Message' is generated by deduction based on other, known, events. An example of a 'Logical Message' is an Information Message that is a reminder to go to the departure gate when the time comes to a specific number of minutes before the gate is due to close. Another example of a 'Logical Message' may be that, after ascertaining that a flight is delayed significantly, an Information Message is sent suggesting that the Traveller visits a specific location in the airport while the Traveller is waiting, this could be anywhere, maybe a shop or a café or the information desk.

The Traveller may not only configure what the Traveller wants to receive but also how the Traveller wants it delivered. For example; maybe the Traveller wants Information Messages delivered in a language other than the default English language or maybe the Traveller would like others to receive the same messages as the Traveller does. This would be achieved by adding more delivery addresses such as telephone numbers or email addresses.

The result of Signing Up and Configuring the service to meet requirements means that each Traveller, with access to a suitable device, is able to be kept personally informed of important information specific to the Traveller during the whole process of making the Traveller's journey.

Having this assurance of timely information delivery relieves the Traveller from the stress of having to take care of finding out and checking information repeatedly on airport screens since each Information Message is automatically stored on the Traveller's device so that it can be referred to again and again as necessary.

The airport gains from this invention because the invention encourages more use of open spaces and existing facilities. Currently on arrival at an airport, if the Traveller is reasonably early for the Traveller's flight, the first thing the Traveller does is finding a screen to look at and get the Traveller's check-in desk information.

This is no longer necessary as the Traveller knows that the Traveller will be informed personally of the check in desk information This, in turn, allows the Traveller to travel in the airport, maybe visiting shops or cafés until the Traveller's first check-in message arrives.

Similarly, if the Traveller has not arrived at the airport before the Traveller's information is available, the Traveller will receive the Traveller's information wherever the Traveller happens to be. All this means that there is less congestion in the airport as fewer people crowd around the airports' screens waiting for information.

Consistent, timely updates to Traveller's increase their awareness of elapsing time and encourage the Traveller to be prompt. This means that there will be less tardiness in general meaning fewer delays to planes that have to wait for late coming travellers. Delayed planes have to taxi for longer than normal after leaving the terminal building while they wait for take off slots. This uses a significant amount of extra fuel and complicates the Air Traffic Controllers task so the Invention will have a cost saving benefit for Airports and the Airline Operators.

The invention can be installed or linked to by any company or entity that wants to track events and inform it's travellers of the progress or consequences of the events, it is a simple case of changing the entity names in the System Model Diagram to suit the case in point along with amending the Sign Up details requirements.

## Claims

1. A method for supplying information to travellers with respect to procedures and/or occurrences related to a travel schedule, which the travellers either are participating in or expect to participate in, and
- where the traveller initially requests information to be supplied from an information supplier to a portable or stationary electronic device, such as a mobile phone, a PDA or a personal computer of the traveller, said information requested to be supplied to the traveller in the event of occurrences or changes to the travel schedule, and
- where an information system receives information about procedures or occurrences from the information sources, said information suppliers comprising at least a transport vessel supplier, such as an airline company or a railway company, and a transport platform where to depart and arrive by use of the transport vessel, such as an airport or a railway station,
- said information system at least forming part of or an information supply chain capable of supplying the traveller with information about the travel schedule, and
- where the information system has already stored in a contact data storage device contact data relating to the traveller requesting the information from the information supplier, said contact data being contact data related to any portable or stationary electronic information receiving device of the traveller, and
- where the information system receives information from the information sources and either stores the information in an information storage device for future processing or immediately forwards the information from the information storage device to the traveller, and
- where the information system, in the event that the information is stored for future processing, sets up a processing schedule of if and when the information is to be forwarded to the traveller, and
- if the information is to be forwarded to the traveller, the information is supplied to the portable or stationary information receiving device of the traveller, when the processing plan so establishes, and
- where the information system, in the event that the information is immediately forwarded to the traveller, supplies the information to the portable or stationary information receiving device of the traveller.

2. A method as claimed in claim 1, where the information supplied to the traveller is at least one of the following contents of information:
| **ID** | **Message Title** |
|---|---|
| M01 | Welcome message |
| M02 | Check In |
| M03 | Go to gate/track |
| M04 | Boarding message |
| M06 | Baggage reclaim |
| M07 | Gate/track changed |
| M08 | Plane/train delayed |
| M09 | Flight/travel cancelled |
| M10 | Wake Up Call |
| M11 | Pick up message |
| M12 | Shop message |
| M13 | Hotel message |
| M14 | Transport message |
| M15 | Plane/train arrived |
| M16 | Baggage in hall |
| M17 | Airport/station closed |
| M18 | Traveller cancellation |
| M19 | Traveller number change |
| M20 | Reservation Change |
| M21 | Pick Up Welcome |
| M22 | Pick Up Delayed |
| M23 | Pick Up On Time |
| M24 | Ad Hoc Message |

3. A method as claimed in claim 2, wherein the messages include at least two of the combination of messages comprised of the messages defined as m01, m02, m03, m04 and m06

4. A method as claimed in Claim 2, wherein the messages include the at least two combination of messages comprised in claim 2 plus any one or more of the following messages: The messages defined as massage m01, message m07, message m10, message m12, message m 18.

5. A system as claimed in Claim 2, wherein the messages include the at least two combination of messages comprised in claim 3 plus any one or more of the following message: The messages defined as message m08, message m09, message m11, message m12, message m13, message m14, message m15, message m16.

6. A method as claimed in Claim 2, wherein the messages include at least 2 of the combination of messages comprised in any of claims 2 to 4 plus the message defined as message m01.

7. A system as claimed in Claim 2, wherein the messages include at least 2 of the combination of messages comprised in claim 2 to 18 plus the message defined as message m18

8. A method as claimed in Claim 2, wherein messages as defined in claims 2 to 21 are delivered in any language as governed by the specification of the receiver.

9. A system for supplying information to travellers with respect to procedures and/or occurrences related to a travel schedule, which the travellers either are participating in or expect to participate in, and
- said system comprising a portable or stationary electronic device, such as a mobile phone, a PDA or a personal computer of the traveller, said device capable of receiving data related to the travel schedule,
- said system furthermore encompassing information suppliers comprising at least a transport vessel supplier, such as an airline company or a railway company, and
- said system furthermore encompassing a transport platform where to depart and arrive by use of the transport vessel, such as an airport or a railway station, and
- said system furthermore encompassing a contact data storage device for storing contact data relating to the traveller, said contact data being contact data related to any portable or stationary electronic information receiving device of the traveller, and
- said system furthermore encompassing an information storage device for storing information from the information sources, said information being supplied to the information storage device for future processing or for immediately forwarding the information to the traveller.

10. Use of a system as claimed in claim 9 for supplying information to travellers with respect to procedures and/or occurrences related to a travel schedule, which the travellers either are participating in or expect to participate in.
